# EUROPEAN PATENT SPECIFICATION

(11) **EP 3 063 045 B1**
(45) Date of publication and mention of the grant of the patent: **03.01.2018**
(21) Application number: 14809512.8
(22) Date of filing: 22.10.2014
(51) Int. Cl.: B60T 11/22, B60T 7/10, B62L 3/02

(54) **LEVER ACTUATED DEVICE FOR A BRAKE AND/OR A CLUTCH, IN PARTICULAR FOR MOTORCYCLES**
HEBELBETÄTIGTE VORRICHTUNG FÜR EINE BREMSE UND/ODER EINE KUPPLUNG, INSBESONDERE FÜR MOTORRÄDER
DISPOSITIF ACTIONNÉ PAR UN LEVIER DESTINÉ À UN EMBRAYAGE ET/OU UN FREIN, EN PARTICULIER DE MOTOCYCLETTES

(30) Priority: 29.10.2013 IT BS20130154
(43) Date of publication of application: 07.09.2016
(73) Proprietor: Freni Brembo S.p.A., 24035 Curno (Bergamo) (IT)
(72) Inventor: ESPOSITO, Alessandro, I-24035 Curno Bergamo (IT); REOLON, Mauro, I-24035 Curno Bergamo (IT)
(74) Representative: Mitola, Marco
(86) International application number: PCT/IB2014/065527
(87) International publication number: WO 2015/063654

(56) References cited:
- EP-A1- 0 065 891
- DE-A1- 19 639 560
- GB-A- 2 082 277

## Description

### FIELD OF APPLICATION

The present invention relates to a lever actuated device for a brake and/or a clutch, in particular for motorcycles.

### BACKGROUND ART

In particular, in the field of motorcycles, it is known to manufacture mechanical and/or hydraulic actuation devices for actuating hydraulic actuators such as brakes and/or clutches.

The actuation device comprises a device body and an actuation lever which, pulled manually by the user, actuates the brake or clutch. Such an actuation is of the hydraulic type and includes the use of pumps provided with a piston influenced by the movement of the actuation lever. Usually, the piston is operatively connected to a push rod which in turn interfaces with a pusher of an actuation lever. The rotation of the actuation lever, thanks to the interposition of the pusher and of the push rod, allows obtaining a translation of the piston and hence the actuation, by means of the hydraulic circuit, of the brake and/or clutch. The piston or float is in turn elastically influenced by a floating spring which is compressed during the braking action and which, at the end of the user's manual action on the actuation lever, extends thus bringing the piston and the same actuation lever to the rest condition.

In motorcycle pumps it is therefore necessary to provide a stop to the movement of the piston or float, which counteracts the force of the floating spring; in particular, the stop serves to define the rest position of the float and keep the the float spring preloaded in compression.

Document GB 2 082 277 A discloses an actuation device according to the preamble of claim 1.

### DISCLOSURE OF THE INVENTION

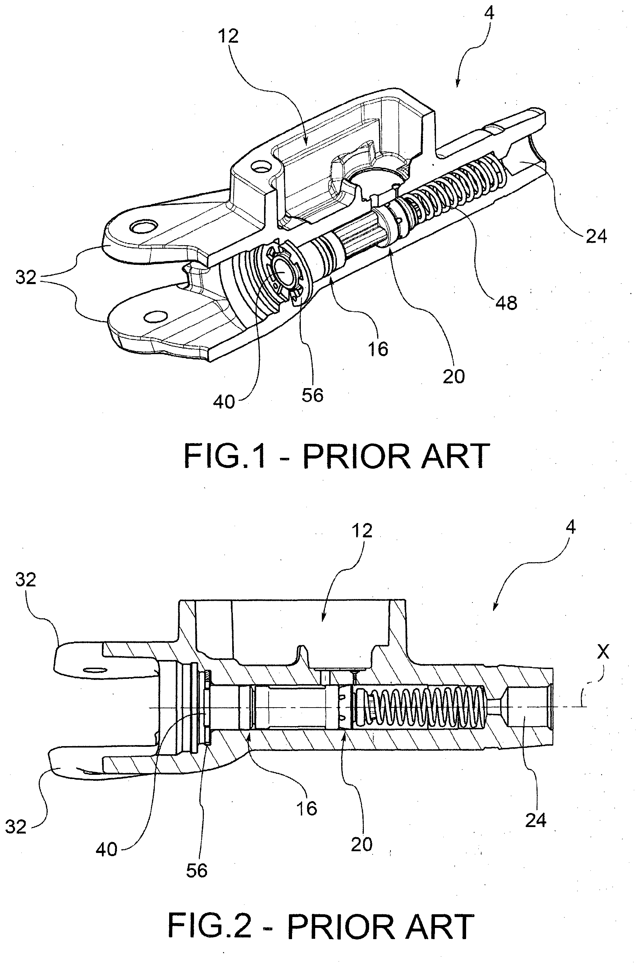

A solution of stop of the prior art (figures 1-2) provides for the implementation of an elastic ring inserted in a dedicated seat arranged at the entrance of the cylindrical seat of the device body which houses the piston, i.e. in the vicinity of the point where the actuation lever, by means of a pusher and/or a push rod, interfaces with the piston.

Such a solution, especially when using moulding techniques, is inconvenient and expensive as it requires the implementation of the seat on the cylindrical side wall of the housing seat of the piston, as well as the provision of a corresponding elastic ring to be inserted in said seat.

It is also known from WO 02/070315 A1, to the name of the same applicant of the present patent application, to provide a clasp or clip positioned at the entrance of the device body, in the vicinity of the actuation lever, as in the case of the solution shown in figures 1-2.

Another drawback associated with the prior art is the difficulty of isolating the hydraulics from the dirt which may infiltrate passing through the gap between the seat, the device body and the float.

The need is therefore felt to provide an actuation device for brakes and/clutches in which the locking of the float or inner piston is at the same time cost-effective to manufacture and reliable, without the risk of infiltration of dust or dirt inside the float seat which would lead to the ineffectiveness of the actuation of the device.

Such a need is met by a device according to claim 1.

In particular, such a need is met by an actuation device for actuating a hydraulic actuator such as a brake and/or a clutch.

### DESCRIPTION OF THE DRAWINGS

Further features and the advantages of the present invention will appear more clearly from the following description of preferred non-limiting embodiments thereof, in which:
figures 1-2 are sectional views, from different angles, of a lever actuated device according to a prior art embodiment;

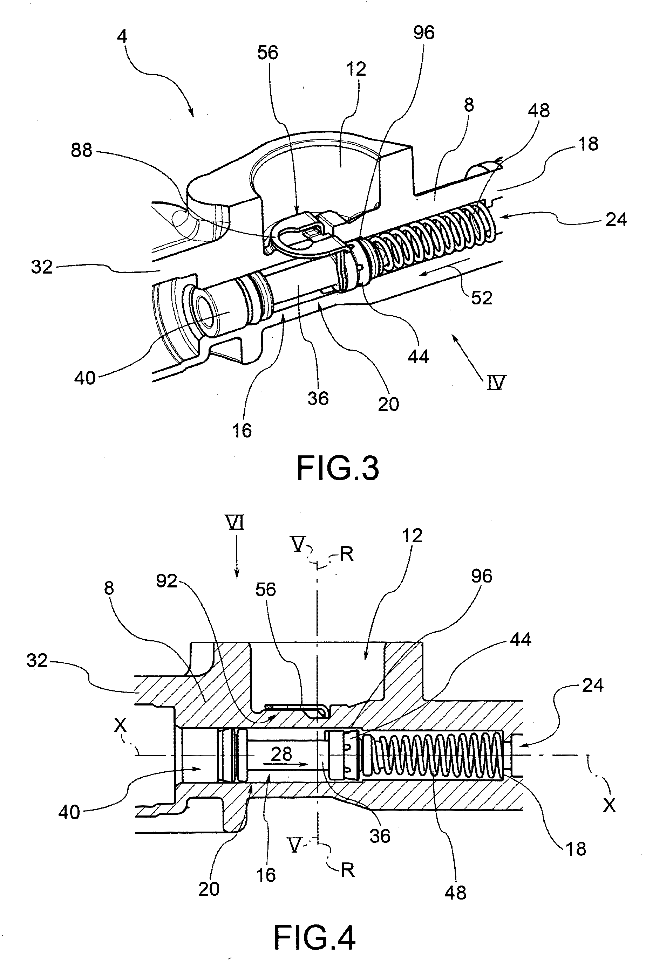

figure 3 is a perspective view, in separate parts, of a lever actuated device according to an embodiment of the present invention;
figure 4 is a lateral view of the device in figure 3 from the side of arrow IV in figure 3;

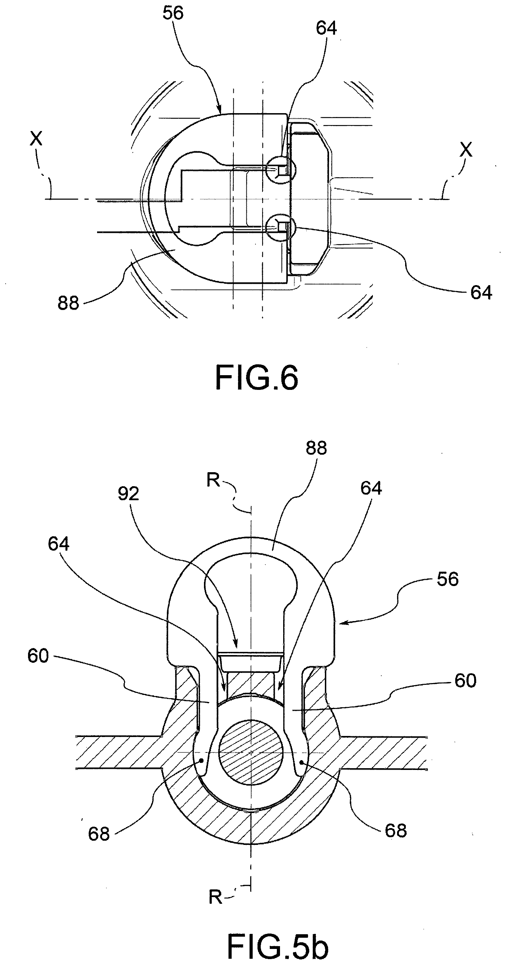

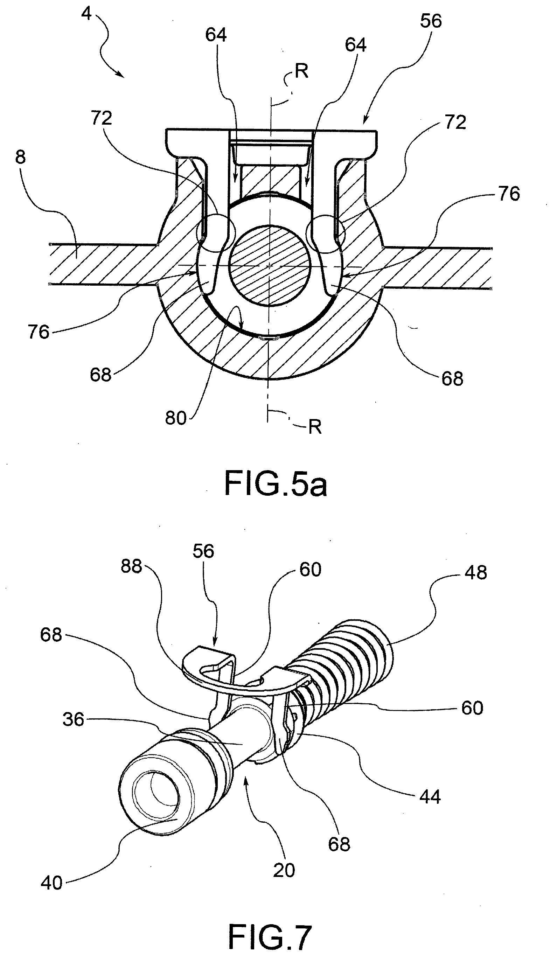

figures 5a-5b are sectional views, according to different embodiments, of the device in figure 3, along the section plane V-V in figure 4;
figure 6 is a top view of a detail of the device in figure 3 from the side of arrow VI in figure 4;
figure 7 is a perspective view of some components of the device in figure 3;

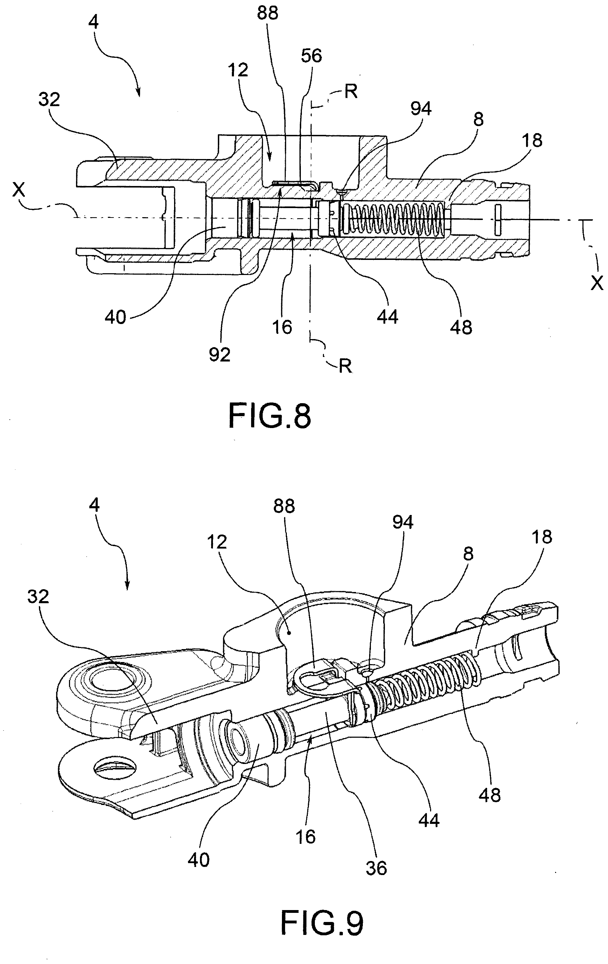

figures 8-9 are sectional views, from different angles, of a lever actuated device according to the present invention;
figures 10a-10b are schematic views of subsequent assembly steps of components of an actuation device according to the present invention.

Elements or parts of elements in common between the embodiments described below are referred to with the same reference numerals.

### DETAILED DESCRIPTION

With reference to the above figures, reference numeral 4 globally indicates an actuation device for brakes and/or clutches, in particular for motorcycles in general. Typically, it is a lever actuated device arranged on the handlebar of the motorcycle which can be used for actuating a hydraulic actuator such as a brake, for example front, arranged on the right side of the handlebar, or a clutch, arranged for example on the left side of the handlebar.

The actuation device may also be of the pedal type, typically used in the field of motorcycles for the actuation of the rear brake.

In the following description, reference will be made to a generic lever actuated device, meaning by this definition both an actuation device provided with a gripping lever and manually actuable, for example mounted on the handlebar of a motorcycle, and an actuation device provided with a lever or pedal actuable by pressure of the user's foot, for example fixed to the chassis of a motorcycle.

The actuation device 4 comprises a device body 8 connectable to a bearing structure, such as a handlebar of a motorcycle or the chassis of a motorcycle (not shown), in a known manner.

According to an embodiment, the device body 8 is provided with a tank of liquid 12 containing the liquid for actuating the hydraulic circuit actuating the actuator. The tank of liquid 12 may be separated from the device body 8 or it may be formed integrally with the same device body 8.

The device body 8 defines a housing seat 16 for at least one piston 20 to put said liquid under pressure within an associable hydraulic circuit of the actuator. The housing seat 16 is for example provided with a seat bottom 18.

Said associable hydraulic circuit comprises for example a delivery conduit in turn fluidically connected to the actuator such as brake or clutch.

According to an embodiment, the housing seat 16 has a main extension which defines an actuation direction X-X of piston 20; the housing seat 16 is also in fluidic connection with the tank of liquid 12, as better described hereafter.

According to an embodiment, the device body 8 supports at least one manual actuation lever or pedal (not shown) adapted to influence said piston 20 in actuation according to a working stroke 28 parallel to the actuation direction X-X.

The working stroke is direct, parallel to the actuation direction X-X, so as to compress the liquid within the actuation circuit, so as to bring piston 20 towards the seat bottom 18 and thus towards the corresponding actuator.

For example, the actuation lever may be rotatably supported by a pair of ears 32.

Piston 20 comprises a stem 36 which extends between an actuation end 40, at which it interfaces with the actuation lever and a thrust head 44 adapted to pressurise the liquid in the hydraulic circuit of the actuator,

Piston 20 is elastically influenced by elastic means 48 in contrast with the action of the actuation lever, adapted to influence piston 20 according to a relief stroke 52, parallel to the actuation direction X-X and opposite to the working stroke 28, so as to reduce the hydraulic pressure in the hydraulic circuit when the actuation lever is not actuated. Said elastic means 48 comprise for example a spiral spring arranged downstream of the thrust head 44 of piston 20, on the opposite side to the actuation end 40. For example, the elastic means 48 abut against said seat bottom 18.

The actuation device 4 comprises at least one stop 56 adapted to determine the position at rest of piston 20, said stop 56 forming an end stop or stop to the relief stroke 52 of piston 20 under the thrust of the elastic means 48.

In other words, in the absence of user's action on the actuation lever, the elastic means 48 act on piston 20 by imposing the relief stroke 52 thereon, so as to reduce the pressure in the hydraulic circuit; said relief stroke 52 is limited by the end stop imposed to the piston by stop 56.

Advantageously, stop 56 is at least partially inserted inside the tank of liquid 12 and comprises at least one branch 60 which crosses at least partially the housing seat 16 of piston 20 through at least one insertion hole 64, branch 60 comprising an abutment 68 which intercepts a portion of piston 20, forming the stop to the relief stroke 52.

Stop 56 is shaped so as not to interfere with piston 20 during the assembly and actuation of device 4 and intercept piston 20 only upon reaching the end of the relief stroke 52.

According to a possible embodiment, stop 56 comprises at least one branch 60 which intercepts stem 36, stem 36 having at least one recess 72 in relation to the thrust head 44, so as to form a support and an undercut for said branch 60, along the actuation direction X-X, and a limit stop abutment for the relief stroke 52.

According to a further embodiment, stop 56 comprises at least a pair of branches 60 which intercept stem 36 at respective recesses 72 in relation to the thrust head 44, so as to form supports and undercuts for said branches 60, and a limit stop abutment for the relief stroke 52.

According to an embodiment, stop 56 is fork-shaped so as to place said branches 60 astride stem 36 of piston 20, in an assembled configuration.

Preferably, said branches 60 have outer rims 76 facing and counter-shaped to an inner side wall 80 which delimits the housing seat 16 of piston 20. Preferably, said outer rims 76 of branches 60 are counter-shaped to the inner side wall 80 of the housing seat 16 so as to provide a support and a better fixing of stop 56 with respect to tank 12 and to the device body 8.

It should be noted that the outer rims 76 of branches 60 abut against a fixed wall: in this way, on the one hand, as seen, the fixing of stop 56 is improved and on the other hand the normal operation and sliding of piston 20 is not interfered with in any way.

Preferably, stop 56 includes a grip portion 88 which projects at least partially inside said tank of liquid 12 so as to permit the gripping of stop 56, for example in the assembly/disassembly steps.

For example, the grip portion 88 is U-shaped so as to connect a pair of branches 60 to each other.

According to an embodiment, in the contact area between stop 56 and the device body and between stop 56 and piston 20, stop 56 is sufficiently rigid so as to ensure a precise positioning of piston 20 at the end of the relief stroke 52. Preferably, stop 56 is elastic in the grip portion 88 which connects branches 60 to each other: in this way, assembly of stop 56 and in particular the passage of branches 60 through the respective insertion holes 64 is facilitated since the branches, per se rigid, can flex in relation to the grip portion so as to easily cross the insertion holes 64. Following the passage of branches 60, stop 56 may resiliently recover its geometry in order to ensure that branches 60 can ensure the precise positioning of piston 20 at the end of the relief stroke 52.

In other words, stop 56 is made with such a geometry as to facilitate the mounting thereof using a flexible area, i.e. the area of the grip portion 88 which connects branches 60 to each other.

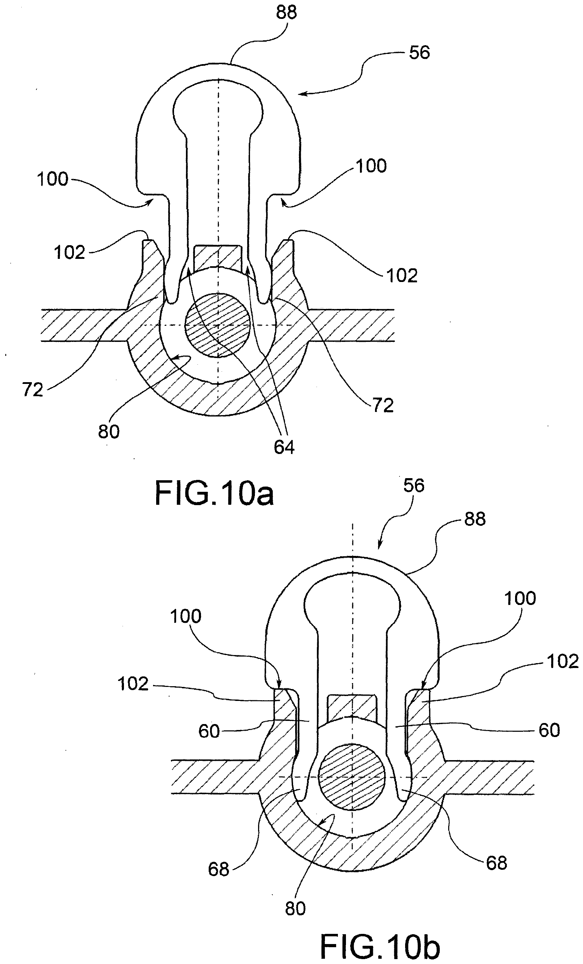

The assembly steps of stop 56, and in particular the passage of branches 60 through the insertion holes 64, are for example shown in figures 10a and 10b. In particular, figure 10a shows the elastic flexing of branches 60 with respect to the grip portion 88 to facilitate the insertion thereof through the insertion holes 64 and figure 10b shows the elastic return of branches 60 in contact against the inner side wall 80 which delimits the housing seat 16 of piston 20.

According to an embodiment, the said grip portion 88 is bent in relation to the end stop abutment 68 of the at least one branch 60.

According to an embodiment, the grip portion 88 and abutment 68 are bent so as to form a right angle, abutment 68 being positioned in a radial direction R-R, perpendicular to the actuation direction X-X, and the grip portion 88 being positioned along the actuation direction X-X, so as to be bent onto an end wall 92 of the tank of liquid 12.

According to an embodiment, at least one branch 60 of stop 56 is inserted with interference in said insertion hole 64. The interference coupling improves the fixing of stop 56 on the device body 8.

According to an embodiment, stop 56 comprises a pair of abutments 100 which form undercuts in relation to branches 60 so as to abut, in an assembled configuration, against corresponding brackets 102 made next to the insertion holes 64. The contact between abutments 100 of stop 56 and brackets 102 provides additional stability to the fixing of the stop on the device body 8.

According to a possible embodiment, at least one insertion hole 64 provides a fluidic connection between the tank of liquid 12 and the housing seat 16 so as to allow the outflow of liquid from tank 12 in said housing seating 16. The coupling between the insertion hole 64 and the corresponding branch 60 can simultaneously achieve both the mechanical locking of stop 56 and the fluidic connection: for example, it is possible to provide that the forced insertion of the branch takes place at a narrowing of the insertion hole 64; in this way, the passage of liquid is allowed and at the same time stop 56 is fixed.

Preferably, the insertion hole 64 is positioned on the tank of liquid 12 so as to be comprised, in the actuation direction X-X, between the actuation end 40 and the thrust head 44. In this way, the volume enclosed within the housing seat 16 between the actuation end 40 and the thrust head 44 is always filled with liquid.

According to a possible embodiment, the tank of liquid 12 comprises a hole or compensation channel 94, 96 which further puts tank 12 in fluidic connection with the housing seat 16 of piston 20, said hole or compensation channel 94, 96 leading downstream of the thrust head 44 of piston 20 with respect to the working stroke 28; moreover, the hole or compensation channel 94, 96 is occluded by the thrust head 44 during the working stroke 28 and is free when piston 20 is in rest condition.

In other words, piston 14, in rest condition, is always set back with respect to the hole or compensation channel 94, 96 so as to allow the hydraulic fluid to always compensate the amount of fluid which, as a result of braking and of the relative consumption of pads, must necessarily be introduced into the hydraulic circuit to prevent the creation of depressions. Moreover, the compensation also serves to compensate the volumetric variations of the fluid due to temperature variation.

In the case of application for clutches, as a result of wear of the clutch, the fluid goes from the circuit to the tank. In general, to compensate for the wear of brake pads or clutch discs, a fluidic connection (through a hole or channel) is needed between the circuit and the tank when the piston is at rest.

The stroke that piston 20 must carry out to close the hole or compensation channel 94, 96 is called idle stroke CV; in fact, during the idle stroke, the fluid in the hydraulic circuit is not put under pressure; only when the hole or compensation channel 94, 96 is completely closed, the system fluid is pressurised and the devices connected thereto, such as a brake or a clutch, can therefore be actuated.

As can be seen from the above description, the actuation device according to the invention allows the drawbacks of the prior art to be overcome.

In particular, the present invention simplifies the construction of the device body; no seats or grooves that create undercuts which complicate the arrangement of the moulds are therefore required.

The stop is arranged within the tank and hence it does not modify in any way the piston seats: in this way, the risk of entry of dust and dirt inside the seats themselves is not increased.

The stop is extremely reliable and does not interfere in any way with the operation of the hydraulic piston.

Moreover, the insertion holes of the stop may be used as openings or communication holes between the tank of liquid and the housing seat of the piston. Therefore, no additional holes are needed: the same holes on the one hand allow the fixing of the piston stop and, on the other hand, allow the fluidic connection between the tank and the seat of the piston itself.

A man skilled in the art may make several changes and adjustments to the devices described above in order to meet specific and incidental needs, all falling within the scope of protection defined in the following claims.

## Claims

1. Actuation device (4) for actuating a hydraulic actuator such as a brake and/or clutch, in particular for motorcycles, the device (4) comprising:
- a device body (8) provided with a tank of liquid (12), the device body (8) defining a housing seat (16) for at least one piston (20) to pressurise said liquid inside the associable hydraulic circuit of the actuator, the housing seat (16) having a main extension which defines an actuation direction (X-X) of the piston (20), the housing seat (16) being in fluidic connection with the tank of liquid (12),
- the device body (8) supporting at least one actuation lever, adapted to influence the piston (20) in actuation in a working stroke (28) parallel to the actuation direction (X-X),
- the piston (20) comprising a stem (36) which extends between an actuation end (40), at which it interfaces with the actuation lever and a thrust head (44) adapted to pressurise the liquid in the hydraulic circuit of the actuator,
- wherein the piston (20) is elastically pressed by elastic means (48) in contrast with the action of the actuation lever, adapted to influence the piston (20) in a relief stroke (52) opposite the working stroke (28), wherein the device (4) comprises at least one stop (56) adapted to determine the position at rest of the piston (20), said stop (56) forming an end stop or stop to the relief stroke (52) of the piston (20) under the thrust of the elastic means (48), wherein
- the stop (56) is at least partially inserted inside the tank of liquid (12), and comprises at least one branch (60) which crosses at least partially the housing seat (16) of the piston (20) through at least one insertion hole (64), the branch (60) comprising an abutment (68) which intercepts a portion of the piston (20), forming the stop to the relief stroke (52), **characterised in that** the stop (56) comprises at least one branch (60) which intercepts the stem (36), the stem (36) having at least one recess (72) in relation to the thrust head (44), so as to form a support and an undercut for said branch (60), along the actuation direction (X-X), and a limit stop abutment for the relief stroke (52).

2. Actuation device (4) according to claim 1, wherein the stop (56) comprises at least a pair of branches (60) which intercept the stem (36) at respective recesses (72) in relation to the thrust head (44), so as to form supports and undercuts for said branches (60), and a limit stop abutment for the relief stroke (52).

3. Actuation device (4) according to any of the previous claims, wherein said stop (56) is fork-shaped so as to place said branches (60) astride the stem (36) of the piston (20), in an assembled configuration.

4. Actuation device (4) according to any of the previous claims, wherein said branches (60) have outer rims (76) facing and counter-shaped to an inner side wall (80) which delimits the housing seat (16) of the piston (20) .

5. Actuation device (4) according to any of the previous claims, wherein the stop (56) comprises a grip portion (88) which projects at least partially inside said tank of liquid (12) so as to permit the gripping of the stop (56).

6. Actuation device (4) according to claim 5, wherein said grip portion (88) is bent in relation to the end stop abutment (68) of the at least one branch (60).

7. Actuation device (4) according to claim 5 or 6, wherein the grip portion (88) and the abutment (68) are bent so as to form a right angle, the abutment (68) being positioned in a radial direction (R-R), perpendicular to the actuation direction (X-X), and the grip portion (88) being positioned along the actuation direction (X-X), so as to be bent onto an end wall (92) of the tank of liquid (12) .

8. Actuation device (4) according to claim 5, 6 or 7, wherein the grip portion (88) is shaped so as to form an undercut for the stop (56) in relation to the at least one insertion hole (64).

9. Actuation device (4) according to any of the claims from 5 to 8, wherein the stop (56) is elastic in the grip portion (88) which connects the branches (60) to each other, so as to facilitate the passage of the branches (60) through the respective insertion holes (64), said branches (60) flexing in relation to the grip portion (88) to cross the insertion holes (64) and elastically recover the geometry in contact with the piston (20).

10. Actuation device (4) according to any of the claims from 2 to 9, wherein the stop (56) comprises a pair of abutments (100) which form undercuts in relation to the branches (60) so as to abut, in an assembled configuration, against corresponding brackets (102) made next to the insertion holes (64) for said branches (60).

11. Actuation device (4) according to any of the previous claims, wherein at least one branch (60) of the stop (56) is inserted with interference in said insertion hole (64).

12. Actuation device (4) according to any of the previous claims, wherein at least one insertion hole (64) forms a fluidic connection between the tank of liquid (12) and the housing seat (16).

13. Actuation device (4) according to any of the previous claims, wherein the insertion hole (64) is positioned on the tank of liquid (12) so as to be comprised, in the actuation direction (X-X), between the actuation end (40) and the thrust head (44).

14. Actuation device (4) according to any of the previous claims, wherein the stop (56) is shaped so as not to interfere with the piston (20) during the assembly and actuation of the device (4) and intercept the piston (20) only upon reaching the end of the relief stroke (52) .

## Patentansprüche

1. Betätigungsvorrichtung (4) zur Betätigung eines Hydraulikaktuators als eine Bremse und/oder Kupplung, insbesondere für Motorräder, wobei die Vorrichtung (4) umfasst:
- einen Vorrichtungskörper (8), der mit einem Flüssigkeitsbehälter (12) versehen ist, wobei der Vorrichtungskörper (8) ein Gehäuseauflager (16) für wenigstens einen Kolben (20) definiert, um die Flüssigkeit im Inneren des verbindbaren Hydraulikkreises des Aktuators unter Druck zu setzen, wobei das Gehäuseauflager (16) eine Hauptausdehnung hat, die eine Betätigungsrichtung (X-X) des Kolbens (20) definiert, wobei das Gehäuseauflager (16) in einer Fluidverbindung mit dem Flüssigkeitsbehälter (12) steht,
- wobei der Vorrichtungskörper (8) wenigstens einen Betätigungshebel hält, der geeignet ist, den Kolben (20) bei der Betätigung in einem Arbeitshub (28) parallel zu der Betätigungsrichtung (X-X) zu beeinflussen,
- wobei der Kolben (20) einen Schaft (36) umfasst, der sich zwischen einem Betätigungsende (40), an dem er eine Schnittstelle mit dem Betätigungshebel bildet, und einem Schubkopf (44), der geeignet ist, die Flüssigkeit in dem Hydraulikkreis des Aktuators unter Druck zu setzen, erstreckt,
- wobei der Kolben (20) durch elastische Mittel (48) entgegen der Tätigkeit des Betätigungshebels, die geeignet sind, den Kolben (20) in einem Entlastungshub (52) entgegengesetzt zu dem Arbeitshub (28) zu beeinflussen, elastisch gedrückt wird,
wobei die Vorrichtung (4) wenigstens einen Anschlag (56) umfasst, der geeignet ist, die Ruheposition des Kolbens (20) zu bestimmen, wobei der Anschlag (56) unter dem Axialschub der elastischen Mittel (48) einen Endanschlag oder Anschlag für den Entlastungshub (52) des Kolbens (20) bildet,
wobei
- der Anschlag (56) wenigstens teilweise ins Innere des Flüssigkeitsbehälters (12) eingesetzt ist und wenigstens einen Zweig (60) umfasst, der das Gehäuseauflager (16) des Kolbens (20) durch wenigstens ein Einsetzloch (64) wenigstens teilweise kreuzt, wobei der Zweig (60) ein Auflager (68) umfasst, das einen Abschnitt des Kolbens (20) auffängt und den Anschlag des Entlastungshubs (52) bildet,
**dadurch gekennzeichnet, dass**
der Anschlag (56) wenigstens einen Zweig aufweist, der den Schaft (36) auffängt, wobei der Schaft (36) wenigstens eine Aussparung (72) in Bezug auf den Schubkopf (44) hat, um eine Halterung und eine Unterschneidung für den Zweig (60) entlang der Betätigungsrichtung (X-X) und ein Grenzanschlagauflager für den Entlastungshub (52) zu bilden.

2. Betätigungsvorrichtung (4) nach Anspruch 1, wobei der Anschlag (56) wenigstens ein Paar von Zweigen (60) umfasst, die den Schaft (36) an jeweiligen Aussparungen (72) in Bezug auf den Schubkopf (44) auffangen, um Halterungen und Unterschneidungen für die Zweige (60) und ein Grezanschlagauflager für den Entlastungshub (52) zu bilden.

3. Betätigungsvorrichtung (4) nach einem der vorhergehenden Ansprüche, wobei der Anschlag (56) gabelförmig ist, um die Zweige (90) in einem montierten Aufbau rittlings auf dem Schaft (36) des Kolbens (20) anzuordnen.

4. Betätigungsvorrichtung (4) nach einem der vorhergehenden Ansprüche, wobei die Zweige (60) Außenränder (76) haben, die einer inneren Seitenwand (80), die das Gehäuseauflager (16) des Kolbens (20) begrenzt, zugewandt und gegenläufig zu dieser geformt sind.

5. Betätigungsvorrichtung (4) nach einem der vorhergehenden Ansprüche, wobei der Anschlag (56) einen Greifabschnitt (88) umfasst, der wenigstens teilweise ins Innere des Flüssigkeitsbehälters (12) vorsteht, um das Greifen des Anschlags (56) zuzulassen.

6. Betätigungsvorrichtung (4) nach Anspruch 5, wobei der Greifabschnitt (88) in Bezug auf das Endanschlagauflager (68) des wenigstens einen Zweigs (60) gekrümmt ist.

7. Betätigungsvorrichtung (4) nach Anspruch 5 oder 6, wobei der Greifabschnitt (88) und das Auflager (68) gekrümmt sind, so dass sie einen rechten Winkel bilden, wobei das Auflager (68) in einer Radialrichtung (R-R) senkrecht zu der Betätigungsrichtung (X-X) positioniert ist und der Greifabschnitt (88) entlang der Betätigungsrichtung (X-X) positioniert ist, so dass er auf einer Endwand (92) des Flüssigkeitsbehälters (12) gekrümmt ist.

8. Betätigungsvorrichtung (4) nach Anspruch 5, 6 oder 7, wobei der Greifabschnitt (88) derart geformt ist, dass er in Bezug auf das wenigstens eine Einsetzloch (64) eine Unterschneidung für den Anschlag (56) bildet.

9. Betätigungsvorrichtung (4) nach einem der Ansprüche 5 bis 8, wobei der Anschlag (56) in dem Greifabschnitt (88), der die Zweige (60) miteinander verbindet, elastisch ist, um den Durchgang der Zweige (60) durch die jeweiligen Einsetzlöcher (64) zu erleichtern, wobei die Zweige (60) sich in Bezug auf den Greifabschnitt (88) biegen, um die Einsetzlöcher (64) zu kreuzen und die Geometrie in Kontakt mit dem Kolben (20) elastisch wiederherzustellen.

10. Betätigungsvorrichtung (4) nach einem der Ansprüche 2 bis 9, wobei der Anschlag (56) ein Paar von Auflagern (100) umfasst, die in Bezug auf die Zweige (60) Unterschneidungen bilden, um in einem montierten Aufbau gegen entsprechende Klammern (102), die neben den Einsetzlöchern (64) für die Zweige (60) hergestellt sind, anzuliegen.

11. Betätigungsvorrichtung (4) nach einem der vorhergehenden Ansprüche, wobei wenigstens ein Zweig (60) des Anschlags (56) festsitzend in das Einsetzloch (64) eingesetzt ist.

12. Betätigungsvorrichtung (4) nach einem der vorhergehenden Ansprüche, wobei wenigstens ein Einsetzloch (64) eine Fluidverbindung zwischen dem Flüssigkeitsbehälter (12) und dem Gehäuseauflager (16) bildet.

13. Betätigungsvorrichtung (4) nach einem der vorhergehenden Ansprüche, wobei das Einsetzloch (64) derart auf dem Flüssigkeitsbehälter (12) angeordnet ist, dass es in der Betätigungsrichtung (X-X) zwischen dem Betätigungsende (40) und dem Schubkopf (44) enthalten ist.

14. Betätigungsvorrichtung (4) nach einem der vorhergehenden Ansprüche, wobei der Anschlag (56) derart geformt ist, dass er den Kolben (20) während der Montage und Betätigung der Vorrichtung (4) nicht stört und den Kolben (20) nur beim Erreichen des Endes des Entlastungshubs (52) auffängt.

## Revendications

1. Dispositif d'actionnement (4) servant à actionner un actionneur hydraulique tel qu'un frein et/ou un embrayage, en particulier pour motocyclettes, le dispositif (4) comprenant :
- un corps de dispositif (8) pourvu d'un réservoir de liquide (12), le corps de dispositif (8) définissant un siège de logement (16) pour au moins un piston (20) pour mettre sous pression ledit liquide à l'intérieur du circuit hydraulique associable de l'actionneur, le siège de logement (16) possédant une extension principale qui définit une direction d'actionnement (X-X) du piston (20), le siège de logement (16) étant en communication fluidique avec le réservoir de liquide (12),
- le corps de dispositif (8) supportant au moins un levier d'actionnement, adapté pour agir sur le piston (20) en actionnement dans une course de travail (28) parallèle à la direction d'actionnement (X-X),
- le piston (20) comprenant une tige (36) qui s'étend entre une extrémité d'actionnement (40), au niveau de laquelle elle assure l'interface avec le levier d'actionnement et une tête de poussée (44) adaptée pour mettre sous pression le liquide dans le circuit hydraulique de l'actionneur,
- dans lequel le piston (20) est pressé élastiquement par un moyen élastique (48) contrairement à l'action du levier d'actionnement, adapté pour agir sur le piston (20) dans une course de détente (52) à l'opposé de la course de travail (28),
dans lequel le dispositif (4) comprend au moins un arrêt (56) adapté pour déterminer la position au repos du piston (20), ledit arrêt (56) formant un arrêt d'extrémité ou un arrêt de la course de détente (52) du piston (20) sous la poussée du moyen élastique (48),
**caractérisé en ce que**
- l'arrêt (56) est au moins partiellement inséré à l'intérieur du réservoir de liquide (12), et comprend au moins une branche (60) qui traverse au moins partiellement le siège de logement (16) du piston (20) au travers d'au moins un orifice d'insertion (64), la branche (60) comprenant une butée (68) qui intercepte une partie du piston (20), formant l'arrêt de la course de détente (52),
- dans lequel l'arrêt (56) comprend au moins une branche (60) qui intercepte la tige (36), ladite tige (36) possédant au moins un évidement (72) en relation avec la tête de poussée (44), de manière à former un support et une contre-dépouille pour ladite branche (60), le long de la direction d'actionnement (X-X), et une butée d'arrêt limite pour la course de détente (52).

2. Dispositif d'actionnement (4) selon la revendication 1, dans lequel l'arrêt (56) comprend au moins une paire de branches (60) qui interceptent la tige (36) au niveau d'évidements (72) respectifs par rapport à la tête de poussée (44), de sorte à former des supports et contre-dépouilles pour lesdites branches (60), et une butée d'arrêt limite pour la course de détente (52).

3. Dispositif d'actionnement (4) selon l'une quelconque des revendications précédentes, dans lequel ledit arrêt (56) est en forme de fourche de sorte à placer lesdites branches (60) à cheval sur la tige (36) du piston (20), dans une configuration assemblée.

4. Dispositif d'actionnement (4) selon l'une quelconque des revendications précédentes, dans lequel lesdites branches (60) présentent des rebords externes (76) faisant face et en contre-forme à une paroi latérale interne (80) qui délimite le siège de logement (16) du piston (20).

5. Dispositif d'actionnement (4) selon l'une quelconque des revendications précédentes, dans lequel l'arrêt (56) comprend une partie de préhension (88) qui fait saillie au moins partiellement à l'intérieur dudit réservoir de liquide (12) de sorte à permettre la préhension de l'arrêt (56).

6. Dispositif d'actionnement (4) selon la revendication 5, dans lequel ladite partie de préhension (88) est courbée par rapport à la butée d'arrêt limite (68) de la au moins une branche (60).

7. Dispositif d'actionnement (4) selon la revendication 5 ou 6, dans lequel la partie de préhension (88) et la butée (68) sont courbées de sorte à former un angle droit, la butée (68) étant positionnée dans une direction radiale (R-R), perpendiculaire à la direction d'actionnement (X-X), et la partie de préhension (88) étant positionnée le long de la direction d'actionnement (X-X), de sorte à être courbée sur une paroi d'extrémité (92) du réservoir de liquide (12).

8. Dispositif d'actionnement (4) selon la revendication 5, 6 ou 7, dans lequel la partie de préhension (88) est conformée de sorte à former une découpe pour l'arrêt (56) par rapport à l'au moins un trou d'insertion (64).

9. Dispositif d'actionnement (4) selon l'une quelconque des revendications 5 à 8, dans lequel l'arrêt (56) est élastique dans la partie de préhension (88) qui relie les branches (60) l'une à l'autre, de sorte à faciliter le passage des branches (60) au travers des trous d'insertion (64) respectifs, lesdites branches (60) fléchissant par rapport à la partie de préhension (88) pour traverser les trous d'insertion (64) et à récupérer élastiquement sa géométrie en contact avec le piston (20).

10. Dispositif d'actionnement (4) selon l'une quelconque des revendications 2 à 9, dans lequel l'arrêt (56) comprend une paire de butées (100) qui forment des découpes par rapport aux branches (60) de sorte à venir en butée, dans une configuration assemblée, contre des supports (102) en correspondance réalisés à proximité des trous d'insertion (64) pour lesdites branches (60).

11. Dispositif d'actionnement (4) selon l'une quelconque des revendications précédentes, dans lequel au moins une branche (60) de l'arrêt (56) est insérée avec interférence dans ledit trou d'insertion (64).

12. Dispositif d'actionnement (4) selon l'une quelconque des revendications précédentes, dans lequel au moins un trou d'insertion (64) forme une communication fluidique entre le réservoir de liquide (12) et le siège de logement (16).

13. Dispositif d'actionnement (4) selon l'une quelconque des revendications précédentes, dans lequel le trou d'insertion (64) est positionné sur le réservoir de liquide (12) de sorte à être compris, dans la direction d'actionnement (X-X), entre l'extrémité d'actionnement (40) et la tête de poussée (44).

14. Dispositif d'actionnement (4) selon l'une quelconque des revendications précédentes, dans lequel l'arrêt (56) est façonnée de sorte à ne pas interférer avec le piston (20) pendant l'assemblage et l'actionnement du dispositif (4) et à n'intercepter le piston (20) que lorsque l'extrémité de la course de détente (52) est atteinte.
